# EUROPÄISCHE PATENTSCHRIFT

(11) **EP 2 724 072 B1**
(45) Veröffentlichungstag und Bekanntmachung des Hinweises auf die Patenterteilung: **06.05.2015**
(21) Anmeldenummer: 12745410.6
(22) Anmeldetag: 19.06.2012
(51) Int. Cl.: F17C 1/00, F17C 1/14

(54) **DRUCKBEHÄLTER ZUM AUFNEHMEN UND SPEICHERN VON KRYOGENEN FLUIDEN, INSBESONDERE VON KRYOGENEN FLÜSSIGKEITEN, UND VERFAHREN ZU DESSEN HERSTELLUNG SOWIE DESSEN VERWENDUNG**
PRESSURE VESSEL FOR RECEIVING AND STORING CRYOGENIC FLUIDS, IN PARTICULAR CRYOGENIC LIQUIDS, METHODS FOR PRODUCING SAID PRESSURE VESSEL, AND USE OF SAID PRESSURE VESSEL
RÉCIPIENT SOUS PRESSION DESTINÉ À CONTENIR ET À STOCKER DES FLUIDES CRYOGÉNIQUES, EN PARTICULIER DES LIQUIDES CRYOGÉNIQUES, ET PROCÉDÉ DE FABRICATION ET UTILISATION DE CE RÉCIPIENT

(30) Priorität: 22.06.2011 DE 102011105423
(43) Veröffentlichungstag der Anmeldung: 30.04.2014
(73) Patentinhaber: MT Aerospace AG, 86153 Augsburg (DE)
(72) Erfinder: RADTKE, Wulf, 82152 Planegg (DE)
(74) Vertreter: Grape & Schwarzensteiner
(86) Internationale Anmeldenummer: PCT/EP2012/061714
(87) Internationale Veröffentlichungsnummer: WO 2012/175499

(56) Entgegenhaltungen:
- EP-A1- 0 303 016
- EP-A2- 0 243 663
- EP-A2- 2 163 325
- WO-A1-99/04056
- DE-A1- 4 114 301
- DE-A1- 19 711 844
- GB-A- 322 702
- JP-A- 2010 112 497
- US-A- 3 255 051
- US-A1- 2003 098 098

## Beschreibung

Die vorliegende Erfindung betrifft einen Druckbehälter zum Aufnehmen und Speichern von kryogenen Fluiden, insbesondere von kryogenen Flüssigkeiten, und ein Verfahren zu dessen Herstellung sowie dessen Verwendung.

Derartige Druckbehälter zur Speicherung kryogener Flüssigkeiten, insbesondere von flüssigem Wasserstoff (LH2), der aufgrund seiner Energieeffizienz und Umweltverträglichkeit als Treibstoff dient, sind allgemein bekannt. Dabei sind diese Druckbehälter aus einem einen Liner bildenden Metallbehälter und einer auf dem Liner aufgebrachten Armierung aus faserverstärktem Kunststoff gebildet. Solche Druckbehälter bzw. Tanks können in allen automotiven Bereichen, wie der Luft- und Raumfahrt, im Schiffs- und Bootsbau und insbesondere in der Automobilindustrie, Anwendung finden. Ein derartiger Druckbehälter ist dem Dokument EP-A-2163325 zu entnehmen.

Flüssiger Wasserstoff (LH2) geht bei einer Temperatur von etwa 20 K (- 253 °C) bei Umgebungsdruck in den gasförmigen Zustand über und ist daher bei Raumtemperatur nicht lagerfähig. Um eine Lagerung mit hoher Speicherdichte in der flüssigen und/oder gasförmigen Phase zu ermöglichen, erfolgt die Speicherung des Wasserstoffs entweder bei tiefkalten (kryogenen) Temperaturen und unter möglichst hohem Druck bis in den überkritischen Bereich hinein oder bei Temperaturen bis zu etwa + 100 °C ebenfalls unter hohem Druck. Das Behältermaterial muss daher eine möglichst hohe (Druck-)Wasserstoffbeständigkeit und Kaltzähigkeit aufweisen. Zudem muss der Druckbehälter bzw. Tank aufgrund des gewünschten Einsatzbereiches extrem leicht sein.

Bisher in der Praxis verwendete Liner von Druckbehältern aus vollaustenitischen Stahl besitzen allesamt einen mangelnden elastischen Bereich, errechnet nach Hooke aus dem Verhältnis von Streckgrenze und E-Modul. Ein geringerer elastischer Bereich aber bedeutet wiederum, dass zur Einschränkung der Betriebsbelastung des Liners auf den elastischen Bereich (zur Vermeidung von Kurzzeitermüdung (low cycle fatique) unter der Wirkung der Druck- und Temperatur-Zyklen eine stärkere Armierung aus faserverstärktem Kunststoff, möglicherweise auch verbunden mit zusätzlicher Zwischenhärtung zur Vermeidung von Engelshaar, aufgewendet werden muss. Dies führt zu einer Gewichtszunahme der Druckbehälter, vergrößert zudem das nicht nutzbare Volumen und ist mithin insgesamt ausgesprochen kostenaufwendig in der Herstellung der Druckbehälter.

Um einer Wasserstoffversprödung zu begegnen, ist in der DE 10 2007 020 027 A1 eine Plasmanitrierung bzw. Aufkohlung eines aus einer austenitischen Stahllegierung hergestellten Rohbehälters vorgeschlagen. Eine solche Plasmanitrierung bzw. Aufkohlung weist allerdings den erheblichen Nachteil auf, dass das nicht-metallische chemische Element in Form von gelöstem Stickstoff oder Kohlenstoff quasi als zusätzliche Schutzschicht auf die Oberfläche der austenitischen Stahllegierung aufgebracht wird und somit unverändert Martensit im austenitischen Grundgefüge gebildet werden kann. Der Martensit bewirkt unter der Einwirkung von Wasserstoff und der vorherrschenden kryogenen Temperatur eine Versprödung und ist deshalb nicht erwünscht.

Der vorliegenden Erfindung liegt daher die Aufgabe zugrunde, einen Druckbehälter zum Aufnehmen und Speichern von Flüssigkeiten, insbesondere von kryogenen Fluiden, zur Verfügung zu stellen, mit welchem sich die obigen Nachteile verhindern lassen, welcher mithin konstruktiv besonders einfach, zugleich kompakt und stabil sowie sehr leichtbauend ist, einen erweiterten elastischen Bereich und eine hohe (Druck-)wasserstoffverträglichkeit sowie Tieftemperatureignung aufweist und in der Herstellung ausgesprochen kostengünstig ist, sowie ein Verfahren zu dessen Herstellung sowie dessen Verwendung bereitzustellen.

Diese Aufgabe wird auf überraschend einfache Weise durch die Merkmale des Anspruchs 1 gelöst.

Durch die Ausgestaltung des erfindungsgemäßen Druckbehälters zum Aufnehmen und Speichern von kryogenen Fluiden, insbesondere von kryogenen Flüssigkeiten, der aus einem einen Liner bildenden Metallbehälter und einer auf dem Liner aufgebrachten Armierung aus faserverstärktem Kunststoff gebildet ist, wobei der Liner aus einer nicht-magnetischen Metalllegierung mit vollaustenitisch kubisch-flächenzentrierter Gitterstruktur gebildet ist und zur Erweiterung bzw. Erhöhung des elastischen Bereiches und/oder zur Erhöhung der Streckgrenze vor Aufbringung der Armierung aus faserverstärktem Kunststoff einer Aufstick-Behandlung mittels Stickstoff oder Ammoniak unterzogen ist, wird eine besonders einfache, zudem kompakte und stabile Bauweise des Druckbehälters von verhältnismäßig geringem Gewicht erreicht. Zugleich weist der erfindungsgemäße Druckbehälter einen erweiterten, ausgesprochen hohen elastischen Bereich auf. Einerseits steigt der elastische Bereich bei Linern aus einer nicht-magnetischen Metalllegierung mit vollaustenitisch kubisch-flächenzentrierter Gitterstruktur per se bereits mit sinkender Temperatur erheblich an, so dass bei kryogener Temperatur der elastische Bereich von Linern aus AluminiumLegierungen erreicht oder gar überschritten wird, auch wenn der elastische Bereich von Ersteren bei Raumtemperatur deutlich, ungefähr in einer Größenordnung von 50 %, unter demjenigen von Letzteren liegt. Andererseits lässt sich durch die Aufstickung selbst zusätzlich eine Erhöhung der Streckgrenze bei konstantem E-Modul erreichen, aus deren Quotient ein solcher erhöhter elastischer Bereich resultiert. Mit diesen legierungstechnischen Maßnahmen können der Stickstoffgehalt, der wiederum durch hohe Chrom- und Mangan-Gehalte, sowie gegebenenfalls durch Zusatz von Niob, gesteigert zu werden vermag, und damit einhergehend der elastische Bereich und die Streckgrenze des Liners zusätzlich erhöht werden. Die Löslichkeit von Stickstoff in vollaustenitischen Stählen kann insbesondere auch durch die Legierungselemente Nickel, Vanadium und Molybdän angehoben werden. Bei einem Einsatz von Nickel ist zur Sicherstellung des vollaustenitischen Zustands ein Anteil von mindestens 13 % bevorzugt. Bei alledem lassen sich damit eine hohe (Druck-)Wasserstoffverträglichkeit sicherstellen und eine Tieftemperatur-Versprödung zuverlässig begrenzen oder vermeiden. Schließlich gestaltet sich die Herstellung des erfindungsgemäßen Behälters einfach und wenig arbeitsintensiv und ist somit in der Herstellung ausgesprochen kostengünstig.

Der Liner ist bei einer Temperatur von größer etwa 1.000 °C, insbesondere in einem Temperaturbereich zwischen etwa 1.000 und etwa 1.200 °C, mittels Stickstoff oder Ammoniak behandelt. Mithin erfolgt die Aufstick-Behandlung bei der Temperatur des Lösungsglühens des Werkstoffes des Liners. Hierdurch kann der Stickstoff vollständig in Lösung gebracht werden. Zudem lässt sich die Bildung von Sprödphasen, wie die Sigma-Phase, die Chi-Phase oder die Chrom-Nitrid-Phase, und damit einhergehend die Bildung von versprödend wirkenden Nitriden vermeiden, die sich bei Aufstickungs-Temperaturen unterhalb von ca. 1.050 °C bilden. Darüber hinaus ist die Diffusionsgeschwindigkeit bei Temperaturen von größer etwa 1.050 °C so groß, dass bei typischen Liner-Wanddicken von ca. 1,0 mm ein "Durchlegieren" mit Stickstoff in kommerziell vernünftigen Zeiten möglich ist.

Im Ergebnis zeichnet sich der Druckbehälter nach der Erfindung durch eine Vielzahl von Vorteilen aus. Der Liner besteht auch noch nach einer vorgenommenen Aufstickung aus einer nicht-magnetischen Metalllegierung mit vollaustenitisch kubisch-flächenzentrierter Gitterstruktur. Vorteilhafterweise werden dabei die hohe Ausgangsstreckgrenze der nicht-magnetischen Metalllegierung mit vollaustenitisch kubisch-flächenzentrierter Gitterstruktur vor der Aufstickung ausgenutzt. Mit einer zusätzlichen Aufstickung lässt sich ohne Schwierigkeit eine hohe Streckgrenze R_{p0,2} von mindestens 800 MPa oder mehr erhalten. Eine hohe Streckgrenze R_{p0,2} wiederum wirkt sich vorteilhaft auf einen möglichst hohen elastischen Bereich ε gemäß Hooke (ε = R_{p0,2} / E) aus.

Weitere vorteilhafte Einzelheiten des erfindungsgemäßen Behälters sind in den Ansprüchen 2 bis 11 beschrieben.

Von ganz besonders großer Bedeutung sind die konstruktiven Maßnahmen des Anspruchs 2, wonach der Liner aus einem U-Boot-Stahl gebildet ist. Bei U-Boot-Stahl als für den Liner erfindungsgemäß vorgesehenen Werkstoff handelt es sich um einen Vollaustenit, d.h. um einen Stahl mit vollaustenitischer Gitterstruktur, der für den Einsatz bei tiefkalten Temperaturen geeignet ist, eine gute (Druck-)Wasserstoffverträglichkeit aufweist und in seinen Materialeigenschaften durch Aufsticken eine Erweiterung des elastischen Bereiches und somit einen erhöhten elastischen Bereich als Funktion des Aufstickgrades erfährt.

Dies lässt sich in ganz besonders vorteilhafter Weise durch die Merkmale des Anspruchs 3 erreichen, wonach der Liner aus der Metalllegierung 1.3914, 1.3948, 1.3952, 1.3957, 1.3964, 1.3965, 1.3974, 1.4529, 1.4547, 1.4565, 1.4566, Nitronic 50, S20910, 22-13-5, XM-19, 1.4652, 1.4659 oder 27-7 Mo gebildet ist.

Entsprechend den Merkmalen des Anspruchs 4 ist der Liner erfindungsgemäß aus wenigstens zwei miteinander zu verschweißenden Einzelteilen zu einem Metallbehälter gefügt.

Weiterhin liegt es im Rahmen der Erfindung, den Liner nach Anspruch 5 teilweise oder vollständig, d.h. lediglich lokal oder in seiner Gesamtheit, der Aufstick-Behandlung mittels Stickstoff oder Ammoniak zu unterziehen.

Entsprechend den Maßnahmen des Anspruchs 6 ist der Liner nach dem Schweißen der Aufstick-Behandlung mittels Stickstoff oder Ammoniak unterzogen. Nachdem Schweißnähte ähnlich mechanische Eigenschaften wie die Metalllegierung des Liners aufweisen müssen, lassen sich Seigerungen in ihrer Wirkung auf mechanische Eigenschaften und Sicherstellung des vollaustenitischen Zustandes kompensieren. Lokale Erweichungen und Abdampfungen von Legierungselementen, insbesondere von Stickstoff und Mangan, durch Schweißwärme können somit nach dem Schweißen ausgeglichen werden.

Entsprechend Anspruch 7 ist der Liner in vorteilhafter Weise nach der Aufstick-Behandlung mittels Hochdruck-Schnellkühlung, insbesondere mit Stickstoff oder Argon, abgeschreckt. Durch ausreichend schnelles Abkühlen von der Temperatur des Lösungsglühens kann der eingebrachte Stickstoff im gelösten Zustand gehalten werden.

Von besonderem Interesse für eine weitere Erhöhung des elastischen Bereiches und der Streckgrenze sind die Maßnahmen des Anspruchs 8, wonach der Liner, insbesondere teilweise oder vollständig, d.h. lediglich lokal oder in seiner Gesamtheit, vor Aufbringung der Armierung aus faserverstärktem Kunststoff um einen Betrag von bis zu etwa 25 %, insbesondere von kleiner etwa 15 %, kaltgereckt ist. Im Vergleich zu Linern aus Aluminium-Legierungen ist der Koeffizient der Erweiterung des elastischen Bereiches durch plastische Verformung (Recken) verdoppelt oder gar verdreifacht. Daraus folgt, dass bei Linern aus einer nicht-magnetischen Metalllegierung mit vollaustenitisch kubisch-flächenzentrierter Gitterstruktur eine Kaltverformung bereits bei geringem Verformungsgrad zu erheblicher Erhöhung des elastischen Bereiches führt. Tatsächlich aber führt das Kaltrecken darüber hinaus sogar zu einer Absenkung des E-Moduls, wodurch zusätzlich ein auf die Erhöhung des Quotienten doppelt günstig wirkender Effekt eintritt. Zudem wird die erfindungsgemäße Kaltverfestigung umso wirksamer, umso höher der Gehalt an Stickstoff in dem Werkstoff bzw. der Metalllegierung des Liners ist. Die Kaltverfestigung startet also bei hohem Stickstoffgehalt bereits bei höherem Streckgrenzen-Niveau und steigt mit steilerem Gradienten.

In diesem Zusammenhang ist es von besonderem Vorteil, dass der Liner nach Anspruch 9 vor oder nach der Aufstick-Behandlung mittels Stickstoff oder Ammoniak kaltgereckt ist.

Weiterhin liegt es im Rahmen der Erfindung, dass der Liner nach Anspruch 10, insbesondere teilweise oder vollständig, d.h. lediglich lokal oder in seiner Gesamtheit, vor dem Kaltrecken lösungsgeglüht ist.

Nach Anspruch 11 ist erfindungsgemäß vorgesehen, dass der Liner, insbesondere teilweise oder vollständig, d.h. lediglich lokal oder in seiner Gesamtheit, nach dem Kaltrecken bevorzugt getempert ist. Das Tempern führt neben dem Abbau von Eigenspannungen zu einer weiteren Steigerung der Streckgrenze einerseits und zur Erweiterung des elastischen Bereiches andererseits bzw. umgekehrt zur Reduktion des erforderlichen Reckgrades.

Diese Aufgabe wird weiterhin in verfahrenstechnischer Hinsicht auf überraschend einfache Weise durch die Merkmale des Anspruchs 12 gelöst.

Die Ausgestaltung des erfindungsgemäßen Verfahrens zur Herstellung eines Druckbehälters für kryogene Flüssigkeiten, der aus einem einen Liner bildenden Metallbehälter und einer auf dem Liner aufgebrachten Armierung aus faserverstärktem Kunststoff gebildet wird, wobei der Liner aus einer nicht-magnetischen Metalllegierung mit vollaustenitisch kubisch flächenzentrierter Gitterstruktur gebildet wird und zur Erweiterung bzw. Erhöhung des elastischen Bereiches und/oder zur Erhöhung der Streckgrenze vor Aufbringung der Armierung aus faserverstärktem Kunststoff einer Aufstick-Behandlung mittels Stickstoff oder Ammoniak unterzogen wird, hat sich in der Praxis neben den bereits im Zusammenhang mit dem Druckbehälter nach der Erfindung beschriebenen Vorteilen, welche das erfindungsgemäße Verfahren gleichermaßen aufweist, als besonders vorteilhaft erwiesen.

Weitere vorteilhafte Einzelheiten der erfindungsgemäßen Verfahren sind in den Ansprüchen 13 bis 24 beschrieben.

In ganz vorteilhafter Weise wird der Liner nach Anspruch 13 aus einem U-Boot-Stahl gebildet.

In diesem Zusammenhang wird der Liner nach dem Anspruch 14 bevorzugt aus der Metalllegierung 1.3914, 1.3948, 1.3952, 1.3957, 1.3964, 1.3965, 1.3974, 1.4529, 1.4547, 1.4565, 1.4566, Nitronic 50, S20910, 22-13-5, XM-19, 1.4652, 1.4659 oder 27-7 Mo gebildet.

Des Weiteren liegt es im Rahmen der Erfindung, dass der Liner nach Anspruch 15 aus wenigstens zwei miteinander zu verschweißenden Einzelteilen zu einem Metallbehälter gefügt wird.

Weiter ist erfindungsgemäß vorgesehen, dass der Liner nach den Maßnahmen des Anspruchs 16 teilweise oder vollständig der Aufstick-Behandlung mittels Stickstoff oder Ammoniak unterzogen wird.

Erfindungsgemäß wird der Liner mittels Stickstoff oder Ammoniak bei einer Temperatur von größer etwa 1.000 °C, insbesondere in einem Temperaturbereich zwischen etwa 1.000 und etwa 1.200 °C, behandelt.

Vorzugsweise wird der Liner entsprechend den Merkmalen des Anspruchs 17 nach der Aufstick-Behandlung mittels Hochdruck-Schnellkühlung, insbesondere mit Stickstoff oder Argon, abgeschreckt.

Entsprechend den verfahrenstechnischen Maßnahmen des Anspruchs 18 kann der Liner nach dem Schweißen einer Aufstick-Behandlung mittels Stickstoff oder Ammoniak unterzogen werden, um den Stickstoffgehalt und damit einhergehend den elastischen Bereich und die Streckgrenze des Liners selbst zu erhöhen.

Von besonderer Bedeutung für das erfindungsgemäße Verfahren sind die Merkmale des Anspruchs 19, dass nämlich der Liner, insbesondere teilweise oder vollständig, vor Aufbringung der Armierung aus faserverstärktem Kunststoff um einen Betrag von bis zu etwa 25 %, insbesondere von kleiner etwa 15 %, kaltgereckt wird.

In diesem Zusammenhang ist es von zusätzlichem Vorteil, den Liner nach Anspruch 20 vor oder nach der Aufstick-Behandlung mittels Stickstoff oder Ammoniak kaltzurecken.

Darüber hinaus liegt es nach Anspruch 21 im Rahmen der Erfindung, dass der Rohling des Liners durch konstanten Druck des hydraulischen oder pneumatischen Druckmediums an zum Beispiel eine Form oder ein Gesenk angepresst wird. Beim Kaltrecken wird der Liner des erfindungsgemäß ausgebildeten Druckbehälters in die Form oder das Gesenk quasi "hineingeblasen", so dass bei beginnendem Anliegen des Liners an der Form bzw. am Gesenk bzw. bei weiter fortschreitendem Anpressen des Liners an die Form bzw. an das Gesenk bei zunächst konstanter Förderrate des hydraulischen oder pneumatischen Druckmediums ein sehr starker Anstieg des Druckes desselben stattfindet. Mithin kann eine einfache Druckbegrenzung als Abschaltkriterium ausgenutzt werden.

Das Kaltrecken durch sogenanntes "Aufblasen" bei erniedrigter Temperatur, d.h. aus praktischen Gründen etwa mittels flüssigen Stickstoffs, verbessert zusätzlich die Verformbarkeit des Liners des erfindungsgemäßen Druckbehälters durch die bei vollaustenitisch kubisch-flächenzentrierten Werkstoffen bekannte Homogenisierung der Verformung und den mithin gesteigerten maximal möglichen Umformgrad zusätzlich und in erheblichem Umfang.

Nach Anspruch 22 ist erfindungsgemäß weiterhin vorgesehen, dass der Liner, insbesondere teilweise oder vollständig, vor dem Kaltrecken einem Lösungsglühen unterzogen wird.

Entsprechend den Maßnahmen des Anspruchs 23 wird der Liner, insbesondere teilweise oder vollständig, nach dem Kaltrecken einem Tempern unterzogen.

Schließlich liegt es noch im Rahmen der Erfindung, den erfindungsgemäßen Druckbehälter zum Aufnehmen und Speichern von Flüssigkeiten, insbesondere von kryogenen Fluiden, vorzugsweise von Sauerstoff und Wasserstoff, nach Anspruch 24 in Fahrzeugen, insbesondere in Luftfahrzeugen oder Fluggeräten der Luft- und Raumfahrt, vorzugsweise in Flugzeugen und Raumflugkörpern, insbesondere in Wasserfahrzeugen, vorzugsweise in einem U-Boot oder Luftkissenfahrzeug (Hovercraft), oder insbesondere in Landfahrzeugen, vorzugsweise in einem Personenkraftwagen, Personenbeförderungswagen, wie einem Bus oder Kleinbus, Lastkraftwagen oder Wohnmobil, zu verwenden. Ganz besonders eignet sich der erfindungsgemäße Druckbehälter für Wasserstofftanks von Kraftfahrzeugen, Raketen-Treibstofftanks, Satellitentanks oder Hochdrucktanks, insbesondere Hochdruck-Gastanks, etwa für Helium, vorzugsweise als komplette Tanks gelagert im flüssigen Wasserstoff, wobei die extrem tiefe Temperatur eine Verkleinerung des Volumens des Hochdrucktanks erlaubt.

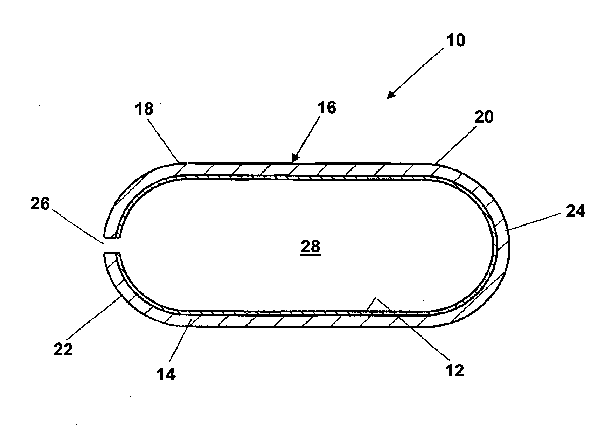

Weitere Merkmale, Vorteile und Einzelheiten der Erfindung ergeben sich aus der nachfolgenden Beschreibung einer bevorzugten Ausführungsform der Erfindung sowie anhand der Zeichnung. Hierbei zeigt die
- Fig.: eine schematische Längsschnittansicht durch eine Ausführungsform eines erfindungsgemäß ausgebildeten Druckbehälters.

Der erfindungsgemäße Druckbehälter 10 zum Aufnehmen und Speichern von Flüssigkeiten, insbesondere von kryogenen Fluiden, vorzugsweise von Sauerstoff und Wasserstoff, findet in vorteilhafter Weise in Fahrzeugen, insbesondere in Luftfahrzeugen oder Fluggeräten der Luft- und Raumfahrt, vorzugsweise in Flugzeugen und Raumflugkörpern, insbesondere in Wasserfahrzeugen, vorzugsweise in einem U-Boot oder Luftkissenfahrzeug (Hovercraft), oder insbesondere in Landfahrzeugen, vorzugsweise in einem Personenkraftwagen, Personenbeförderungswagen, wie einem Bus oder Kleinbus, Lastkraftwagen oder Wohnmobil, Verwendung. In ganz besonderem Maße lässt sich der erfindungsgemäße Druckbehälter 10 für einen Wasserstofftank eines Kraftfahrzeuges oder einen Raketen-Treibstofftank oder Satellitentank eines Fluggerätes der Luft- und Raumfahrt oder einen Hochdrucktank oder Hochdruck-Gastank einsetzen. Insbesondere Hochdruck-Gastanks, etwa für Helium, vorzugsweise als komplette Tanks gelagert im flüssigen Wasserstoff, wobei die extrem tiefe Temperatur eine Verkleinerung des Volumens des Hochdruck-Gastanks erlaubt, finden in geeigneter Weise Verwendung als erfindungsgemäßer Druckbehälter 10.

Die in der Fig. schematisch dargestellte Ausführungsform des Behälters 10 nach der Erfindung umfasst einen Metallbehälter, der einen Liner 12 bildet, und eine Armierung 14 aus faserverstärktem Kunststoff, die auf dem Liner 12 aufgebracht ist.

Wie der Fig. entnehmbar ist, weist der Liner 12 einen im Wesentlichen zylindrischen Abschnitt 16 auf. An den jeweiligen Enden 18 und 20 des zylindrischen Abschnitts 16 grenzen domförmige Abschnitte 22 und 24 an. Diese können integral mit dem zylindrischen Abschnitt 16 ausgebildet oder angeschweißt sein. An wenigstens einem der domförmigen Abschnitte 22 oder 24 ist ein Flaschenkopf 26 (nicht dargestellt) integrierbar, beispielsweise ebenfalls verschweißbar.

Es ist bekannt, dass Metalle und Metalllegierungen, welche häufig oder sogar ständig Wasserstoff ausgesetzt sind, einer Versprödung unterworfen sind. Ein Maß hierfür ist der sogenannte Versprödungsindex, der jedoch keine Vorhersage der tatsächlichen Materialeigenschaften im Einsatz zulässt, da die Bruchfestigkeit eines Materials in einer (Druck-)Wasserstoffumgebung von den verschiedensten Faktoren beeinflusst wird, wie dem Wasserstoffgasdruck, der Temperatur und der Zugspannung. Es müssen daher alle relevanten Eigenschaften für einen bestimmten Einsatzbereich bei der Auswahl geeigneter Legierungen für einen Wasserstofftankliner in Betracht gezogen werden.

Neben der (Druck-)-Wasserstoffverträglichkeit und Tieftemperatureignung sind als Auswahlkriterien allem voran ein erweiterter elastischer Bereich und eine hohe Streckgrenze zu nennen. Diese Eigenschaften müssen in einem Temperaturbereich von etwa 4 K bis ca. 400 K und bei Drücken bis zu etwa 700 bar weitgehend stabil sein.

Der erfindungsgemäße Liner 12 besteht aus einer nicht-magnetischen Metalllegierung mit vollaustenitisch kubisch-flächenzentrierter Gitterstruktur und ist insbesondere aus einem U-Boot-Stahl, vorzugsweise aus der Metalllegierung 1.3914, 1.3948, 1.3952, 1.3957, 1.3964, 1.3965, 1.3974, 1.4529, 1.4547, 1.4565, 1.4566, Nitronic 50, S20910, 22-13-5, XM-19, 1.4652, 1.4659 oder 27-7 Mo, gebildet.

Aus den vorher genannten Werkstoffen wird der erfindungsgemäße Druckbehälter 10 in üblicher Weise hergestellt bzw. mit Hilfe vorgefertigter Bauelemente (beispielsweise der zylinderförmige Abschnitt 16 und die domförmigen Abschnitte 22, 24) zusammengesetzt bzw. geschweißt. Alternativ dazu ist es ebenso denkbar, einen nahtlos geformten Liner 12 vorzusehen. An geeigneten Abschnitten des Druckbehälters 10 ist wenigstens ein Flaschenkopf 26 zum Befüllen und Entleeren integrierbar.

In besonders vorteilhafter Weise wird der Liner 12 vor Aufbringung der Armierung 14 aus faserverstärktem Kunststoff einer Aufstick-Behandlung mittels Stickstoff oder Ammoniak unterzogen. Auf diese Weise werden der Stickstoffgehalt und damit einhergehend der elastische Bereich und die Streckgrenze des Liners 12 selbst erhöht. Die Geometrie des Liners 12 bleibt dabei unverändert erhalten.

Der Liner 12 kann der Aufstick-Behandlung mittels Stickstoff oder Ammoniak dabei teilweise oder vollständig unterzogen werden.

In diesem Zusammenhang ist es von besonderem Vorteil, dass der Liner, insbesondere teilweise oder vollständig, bei einer Temperatur von größer etwa 1.000 °C mittels Stickstoff oder Ammoniak behandelt wird. Vorzugsweise erfolgt das Aufsticken in einem Temperaturbereich zwischen etwa 1.000 und etwa 1.200 °C in Stickstoff- oder Ammoniakatmosphäre mit geeignetem Stickstoff- bzw. Ammoniakdruck. Das Aufsticken findet mithin in einem Temperaturbereich des Lösungsglühens statt.

Nach der Aufstick-Behandlung wird der Liner 12 mittels Hochdruck-Schnellkühlung, insbesondere mit Stickstoff oder Argon, abgeschreckt.

Vorzugsweise wird die Aufstick-Behandlung nach dem Schweißen vorgenommen.

Entsprechend vorgesehenen verfahrenstechnischen Maßnahmen kann der Liner 12 darüber hinaus vorzugsweise, insbesondere teilweise oder vollständig, vor Aufbringung der Armierung aus faserverstärktem Kunststoff, um einen Betrag von bis zu etwa 25 %, insbesondere von kleiner etwa 15 %, kaltgereckt werden.

Vor dem Kaltrecken kann der Liner 12 bzw. ein Rohling (nicht dargestellt) des Liners 12 vorzugsweise einem Lösungsglühen unterzogen werden.

Zum Kaltrecken wird der Rohling des Liners 12, der in Form und Abmessung kleiner ausgestaltet ist als der herzustellende Liner 12, in eine Form oder ein Gesenk (nicht gezeigt) verbracht. Der Rohling des Liners 12 wird sodann mit einem hydraulischen oder pneumatischen Druckmedium beaufschlagt, das an das Innere 28 des Liners 12 angelegt wird. Durch das hydraulische oder pneumatische Druckmedium wird der Rohling des Liners 12 zu dem in Form und Abmessung von Form oder Gesenk entsprechenden Liner 12 umgeformt, quasi "aufgeblasen". Dabei kommt der umzuformende Rohling des Liners 12 wenigstens mit der Form oder dem Gesenk zur Anlage und/oder wird darüber hinausgehend an die Form oder das Gesenk weiter angepresst. Der Liner 12 wird dabei um einen Betrag von bis etwa 25 %, insbesondere von kleiner etwa 15 %, kaltgereckt.

Schließlich wird der Liner 12 der Form oder dem Gesenk entnommen.

Nach dem Kaltrecken wird der Liner 12 noch bevorzugt einem Tempern unterzogen. Das Tempern führt neben dem Abbau von Eigenspannungen zu einer weiteren Steigerung der Streckkennwerte bzw. umgekehrt zur Reduktion des erforderlichen Reckgrades. Die Wirkung des Temperns kann als Reckalterung bzw. als Blockierung von Versetzungen, die durch das Kaltrecken eingebracht wurden, durch Stickstoffatome interpretiert werden. Je höher der Kaltumformgrad und je höher der Stickstoffgehalt, umso größer fällt die Erweiterung des elastischen Bereiches aus. Nachfolgende Tabelle zeigt die Materialeigenschaften vor und nach Kaltrecken im Überblick.

Im Anschluss daran wird die Armierung 14 des erfindungsgemäßen Druckbehälters 10 unter entsprechender Vorspannung gewickelt.

Die Armierung 14 des Druckbehälters 10 nach der Erfindung ist aus einem Faserverbundkunststoff aufgebaut. Die Armierung 14 liegt unter Spannung an dem Liner 12 aus der weiter oben für die Erfindung definierten Metalllegierung an. Der Liner 12 kleidet im gezeigten Fall die Armierung 14 vollständig aus.

Der Druckbehälter 10 kann im Nasswickelverfahren und Harzinfiltrationsverfahren mit dem Faserverbund ausgerüstet werden. Wesentlich ist, dass der die Außenwand bildende Faserverbund im ausgehärteten Zustand unter Spannung an dem die Innenwand bildenden Liner 12 anliegt. Es können vorgetränkte Faserbündel oder -stränge, sogenannte Rovings, verwendet werden. Das Verfahren zur Ausbildung des faserverstärkten Kunststoffes auf dem Liner 12 soll jedoch nicht auf das Nasswickelverfahren beschränkt sein. So kann ebenso das Prepregwickelverfahren oder das Einzelstrang-Wickelverfahren zum Einsatz kommen.

Die Fasern sind vorzugsweise Kohlenstoff-, Glas-, Basalt-, Aramid- und/oder Keramikfasern, sind jedoch nicht darauf beschränkt. Vielmehr können alle thermisch und mechanisch hochfesten Fasern Anwendung finden. Neben Glasfasern besitzen Basaltfasern den Vorteil eines deutlich positiven Ausdehnungskoeffizienten und gestatten mithin eine Reduzierung der Differenz des Wärmeausdehnungskoeffizienten zum Liner 12.

Obwohl Polyurethanharze geeignet sind, werden wegen ihres duroplastischen Verhaltens und ihrer besseren Verarbeitbarkeit hauptsächlich Epoxidharze eingesetzt. Denkbar sind jedoch auch Harzgemische, beispielsweise aus Polyurethan und Epoxid.

Durch die getroffene Materialauswahl für den Liner 12 und die Aufstickung dessen kann ein Druckbehälter 10 zur Verfügung gestellt werden, der eine verbesserte Lagerfähigkeit für flüssigen und/oder gasförmigen Wasserstoff aufgrund Hochdruckwasserstofftoleranz und aufgrund der Eignung für kryogene Temperaturen besitzt. Gleichzeitig sind Anforderungen hinsichtlich der Steifigkeit und dem elastischen Bereich sowie Anforderungen hinsichtlich dem Beulverhalten und Leichtbauanforderungen optimal erfüllt.

Die vorliegende Erfindung ist nicht auf die dargestellte Ausführungsform des Liners 12 beschränkt. So ist es ohne weiteres möglich, zwei Zylinder halber Gesamtlänge mit jeweils integralen Domen, welche beispielsweise durch eine geeignete Umformtechnik, wie Drückwalzen, eines entsprechend geformten Rohlings hergestellt werden, durch eine in der Mitte der Länge des Druckbehälters liegende Schweißnaht zum Liner 12 zu fügen. Kugelförmige Druckbehälter oder Druckbehälter mit beliebiger anderer rotationssymmetrischer und/oder nicht rotationssymmetrischer Form sind ebenfalls möglich. Zum Beispiel können die domförmigen Abschnitte 22 halbkugelförmig, kugelkappenförmig, kalottenförmig, ellipsoidkallotenförmig, konisch, elliptisch, in Cassini-Form, Halb-Torus-förmig oder mit dergleichen anderen Querschnittsformen ausgebildet sein.

Darüber hinaus ist es grundsätzlich auch denkbar, das Aufsticken erst nach einem (teilweisen oder vollständigen) Kaltrecken durchzuführen. Beliebige weitere Ausführungsformen des erfindungsgemäßen Verfahrens, welche ein Kaltrecken und/oder Aufsticken in unterschiedlichster zeitlicher Abfolge vorsehen sowie gleichermaßen von der Lehre der Erfindung mitumfasst und abgedeckt sind, sind in der nachfolgenden Tab. beispielhaft angeführt.

**Tab.**

| Aufsticken I | Aufsticken II | Aufsticken + Kaltrecken I | Aufsticken + Kaltrecken II | Aufsticken + Kaltrecken III |
|---|---|---|---|---|
| Einzelteile fertigen und zum Liner schweißen | Einzelteile fertigen und zu Halblinern schweißen | Einzelteile fertigen und zu Halblinern schweißen | Einzelteile fertigen und zu Halblinern schweißen | Einzelteile fertigen und zu Halblinern schweißen |
| Liner aufsticken | Aufsticken der Liner-Hälften | Aufsticken der Liner-Hälften | Aufsticken der Liner-Hälften | Aufsticken der Liner-Hälften |
| | Schweißen zum Liner | Schweißen zum Liner (kleinerer Naht-0) | Schweißen zum Liner (kleinerer Naht-0) | Schweißen zum Liner |
| | Lokales Aufsticken der Montage-Schweißnaht | Lokales Kaltrecken der Naht | Lokales Aufsticken der Montage-Schweißnaht | Lokales Aufsticken der Montage-Schweißnaht |
| | | (Tempern) | Lokales Kaltrecken der Naht | Globales Kaltrecken |
| | | | (Tempern) | (Tempern) |

## Patentansprüche

1. Druckbehälter zum Aufnehmen und Speichern von kryogenen Fluiden, insbesondere von kryogenen Flüssigkeiten, der aus einem einen Liner (12) bildenden Metallbehälter und einer auf dem Liner (12) aufgebrachten Armierung (14) aus faserverstärktem Kunststoff gebildet ist, **dadurch gekennzeichnet, dass** der Liner (12) aus einer nicht-magnetischen Metalllegierung mit vollaustenitisch kubisch-flächenzentrierter Gitterstruktur gebildet ist und zur Erhöhung der Streckgrenze R_{p0,2} von mindestens 800 MPa oder mehr vor Aufbringung der Armierung (14) aus faserverstärktem Kunststoff einer Aufstick-Behandlung bei einer Temperatur von größer 1.000 °C, insbesondere in einem Temperaturbereich zwischen 1.000 und 1.200 °C mittels Stickstoff oder Ammoniak unterzogen ist.

2. Druckbehälter nach Anspruch 1, **dadurch gekennzeichnet, dass** der Liner (12) aus einem U-Boot-Stahl gebildet ist.

3. Druckbehälter nach Anspruch 1 oder 2, **dadurch gekennzeichnet, dass** der Liner (12) aus der Metalllegierung 1.3914, 1.3948, 1.3952, 1.3957, 1.3964, 1.3965, 1.3974, 1.4529, 1.4547, 1.4565, 1.4566, Nitronic 50, S20910, 22-13-5, XM-19, 1.4652, 1.4659 oder 27-7 Mo gebildet ist.

4. Druckbehälter nach einem der Ansprüche 1 bis 3, **dadurch gekennzeichnet, dass** der Liner (12) aus wenigstens zwei miteinander zu verschweißenden Einzelteilen zu einem Metallbehälter gefügt ist.

5. Druckbehälter nach einem der Ansprüche 1 bis 4, **dadurch gekennzeichnet, dass** der Liner (12) teilweise oder vollständig der Aufstick-Behandlung mittels Stickstoff oder Ammoniak unterzogen ist.

6. Druckbehälter nach einem der Ansprüche 1 bis 5, **dadurch gekennzeichnet, dass** der Liner (12) nach dem Schweißen der Aufstick-Behandlung mittels Stickstoff oder Ammoniak unterzogen ist.

7. Druckbehälter nach einem der Ansprüche 1 bis 6, **dadurch gekennzeichnet, dass** der Liner (12) nach der Aufstick-Behandlung mittels Hochdruck-Schnellkühlung, insbesondere mit Stickstoff oder Argon, abgeschreckt ist.

8. Druckbehälter nach einem der Ansprüche 1 bis 7, **dadurch gekennzeichnet, dass** der Liner (12), insbesondere teilweise oder vollständig, vor Aufbringung der Armierung (14) aus faserverstärktem Kunststoff um einen Betrag von bis zu etwa 25 %, insbesondere von kleiner etwa 15 %, kaltgereckt ist.

9. Druckbehälter nach Anspruch 8, **dadurch gekennzeichnet, dass** der Liner (12) vor oder nach der Aufstick-Behandlung mittels Stickstoff oder Ammoniak kaltgereckt ist.

10. Druckbehälter nach einem der Ansprüche 1 bis 9, **dadurch gekennzeichnet, dass** der Liner (12), insbesondere teilweise oder vollständig, vor dem Kaltrecken lösungsgeglüht ist.

11. Druckbehälter nach einem der Ansprüche 1 bis 10, **dadurch gekennzeichnet, dass** der Liner (12), insbesondere teilweise oder vollständig, nach dem Kaltrecken getempert ist.

12. Verfahren zur Herstellung eines Druckbehälters für kryogene Flüssigkeiten, der aus einem einen Liner (12) bildenden Metallbehälter und einer auf dem Liner (12) aufgebrachten Armierung (14) aus faserverstärktem Kunststoff gebildet wird, insbesondere nach einem der vorhergehenden Ansprüche, **dadurch gekennzeichnet, dass** der Liner (12) aus einer nicht-magnetischen Metalllegierung mit vollaustenitisch kubisch flächenzentrierter Gitterstruktur gebildet wird und zur Erhöhung der Streckgrenze R_{p0,2} von mindestens 800 MPa oder mehr vor Aufbringung der Armierung (14) aus faserverstärktem Kunststoff einer Aufstick-Behandlung bei einer Temperatur von größer 1.000 °C, insbesondere in einem Temperaturbereich zwischen 1.000 und 1.200 °C mittels Stickstoff oder Ammoniak unterzogen wird.

13. Verfahren nach Anspruch 12, **dadurch gekennzeichnet, dass** der Liner (12) aus einem U-Boot-Stahl gebildet wird.

14. Verfahren nach Anspruch 12 oder 13, **dadurch gekennzeichnet, dass** der Liner (12) aus der Metalllegierung 1.3914, 1.3948, 1.3952, 1.3957, 1.3964, 1.3965, 1.3974, 1.4529, 1.4547, 1.4565, 1.4566, Nitronic 50, S20910, 22-13-5, XM-19, 1.4652, 1.4659 oder 27-7 Mo gebildet wird.

15. Verfahren nach einem der Ansprüche 12 bis 14, **dadurch gekennzeichnet, dass** der Liner (12) aus wenigstens zwei miteinander zu verschweißenden Einzelteilen zu einem Metallbehälter gefügt wird.

16. Verfahren nach einem der Ansprüche 12 bis 15, **dadurch gekennzeichnet, dass** der Liner (12) teilweise oder vollständig der Aufstick-Behandlung mittels Stickstoff oder Ammoniak unterzogen wird.

17. Verfahren nach einem der Ansprüche 12 bis 16, **dadurch gekennzeichnet, dass** der Liner (12) nach der Aufstick-Behandlung mittels Hochdruck-Schnellkühlung, insbesondere mit Stickstoff oder Argon, abgeschreckt wird.

18. Verfahren nach einem der Ansprüche 12 bis 17, **dadurch gekennzeichnet, dass** der Liner (12) nach dem Schweißen der Aufstick-Behandlung mittels Stickstoff oder Ammoniak unterzogen wird.

19. Verfahren nach einem der Ansprüche 12 bis 18, **dadurch gekennzeichnet, dass** der Liner (12), insbesondere teilweise oder vollständig, vor Aufbringung der Armierung (14) aus faserverstärktem Kunststoff um einen Betrag von bis zu etwa 25 %, insbesondere von kleiner etwa 15 %, kaltgereckt wird.

20. Verfahren nach Anspruch 19, **dadurch gekennzeichnet, dass** der Liner (12) vor oder nach der Aufstick-Behandlung mittels Stickstoff oder Ammoniak kaltgereckt wird.

21. Verfahren nach Anspruch 19 oder 20, **dadurch gekennzeichnet, dass** der Rohling des Liners (12) durch konstanten Druck des hydraulischen oder pneumatischen Druckmediums an die Form oder dem Gesenk angepresst wird.

22. Verfahren nach einem der Ansprüche 12 bis 21, **dadurch gekennzeichnet, dass** der Liner (12), insbesondere teilweise oder vollständig, vor dem Kaltrecken einem Lösungsglühen unterzogen wird.

23. Verfahren nach einem der Ansprüche 12 bis 22, **dadurch gekennzeichnet, dass** der Liner (12), insbesondere teilweise oder vollständig, nach dem Kaltrecken einem Tempern unterzogen wird.

24. Verwendung eines Druckbehälters nach einem der Ansprüche 1 bis 11 oder erhalten nach einem Verfahren gemäß den Ansprüchen 12 bis 23 zum Aufnehmen und Speichern von Flüssigkeiten, insbesondere von kryogenen Fluiden, vorzugsweise von Sauerstoff und Wasserstoff, in Fahrzeugen, insbesondere in Luftfahrzeugen oder Fluggeräten der Luft- und Raumfahrt, vorzugsweise in Flugzeugen und Raumflugkörpern, insbesondere in Wasserfahrzeugen, vorzugsweise in einem U-Boot oder Luftkissenfahrzeug (Hovercraft), oder insbesondere in Landfahrzeugen, vorzugsweise in einem Personenkraftwagen, Personenbeförderungswagen, wie ein Bus oder Kleinbus, Lastkraftwagen oder Wohnmobil.

## Claims

1. Pressure vessel for receiving and storing cryogenic fluids, in particular cryogenic liquids, said pressure vessel being composed of a metal vessel that forms a liner (12) and a reinforcement (14) made of fiber-reinforced plastic applied to the liner (12), **characterized in that** the liner (12) is made of a non-magnetic metal alloy having a fully austenitic face-centered cubic lattice structure and, in order to increase the yield strength Rp_{0,2} of at least 800 MPa or more, prior to applying the reinforcement (14) made of fiber-reinforced plastic, said liner is subjected to a nitriding treatment at a temperature of more than 1,000°C, in particular at a temperature range between 1,000 and 1,200°C, by means of nitrogen or ammonia.

2. Pressure vessel according to claim 1, **characterized in that** the liner (12) is made of a submarine steel.

3. Pressure vessel according to claim 1 or 2, **characterized in that** the liner (12) is made of the metal alloy 1.3914, 1.3948, 1.3952, 1.3957, 1.3964, 1.3965, 1.3974, 1.4529, 1.4547, 1.4565, 1.4566, Nitronic 50, S20910, 22-13-5, XM-19, 1.4652, 1.4659 or 27-7 Mo.

4. Pressure vessel according to one of the claims 1 to 3, **characterized in that** the liner (12) is joined from at least two separate components to be welded together forming a metal vessel.

5. Pressure vessel according to one of the claims 1 to 4, **characterized in that** the liner (12) is partially or fully subjected to the nitriding treatment by means of nitrogen or ammonia.

6. Pressure vessel according to one of the claims 1 to 5, **characterized in that** the liner (12) after welding is subjected to the nitriding treatment by means of nitrogen or ammonia.

7. Pressure vessel according to one of the claims 1 to 6, **characterized in that** the liner (12) after the nitriding treatment is quenched by means of high-pressure quick cooling, in particular with nitrogen or argon.

8. Pressure vessel according to one of the claims 1 to 7, **characterized in that** the liner (12), in particular partially or fully, before applying the reinforcement (14) made of fiber-reinforced plastic, is cold-drawn by an amount of up to approximately 25%, in particular of less than approximately 15%.

9. Pressure vessel according to claim 8, **characterized in that** the liner (12), before or after the nitriding treatment by means of nitrogen or ammonia, is cold-drawn.

10. Pressure vessel according to one of the claims 1 to 9, **characterized in that** the liner (12), in particular partially or fully, is solution-annealed before being cold-drawn.

11. Pressure vessel according to one of the claims 1 to 10, **characterized in that** the liner (12), in particular partially or fully, is tempered after being cold-drawn.

12. Method for producing a pressure vessel for cryogenic liquids, composed of a metal vessel that forms a liner (12) and a reinforcement (14) made of fiber-reinforced plastic applied to the liner (12), in particular according to one of the above claims, **characterized in that** the liner (12) is made of a non-magnetic metal alloy having a fully austenitic face-centered cubic lattice structure and, in order to increase the yield strength Rp_{0,2} of at least 800 MPa or more, prior to applying the reinforcement (14) made of fiber-reinforced plastic, said liner is subjected to a nitriding treatment at a temperature of more than 1,000°C, in particular at a temperature range between 1,000 and 1,200°C, by means of nitrogen or ammonia.

13. Method according to claim 12, **characterized in that** the liner (12) is made of a submarine steel.

14. Method according to claim 12 or 13, **characterized in that** the liner (12) is made of the metal alloy 1.3914, 1.3948, 1.3952, 1.3957, 1.3964, 1.3965, 1.3974, 1.4529, 1.4547, 1.4565, 1.4566, Nitronic 50, S20910, 22-13-5, XM-19, 1.4652, 1.4659 or 27-7 Mo.

15. Method according to one of the claims 12 to 14, **characterized in that** the liner (12) is joined from at least two separate components to be welded together forming a metal vessel.

16. Method according to one of the claims 12 to 15, **characterized in that** the liner (12) is partially or fully subjected to the nitriding treatment by means of nitrogen or ammonia.

17. Method according to one of the claims 12 to 16, **characterized in that** the liner (12) after the nitriding treatment is quenched by means of high-pressure quick cooling, in particular with nitrogen or argon.

18. Method according to one of the claims 12 to 17, **characterized in that** the liner (12) after welding is subjected to the nitriding treatment by means of nitrogen or ammonia.

19. Method according to one of the claims 12 to 18, **characterized in that** the liner (12), in particular partially or fully, before applying the reinforcement (14) made of fiber-reinforced plastic, is cold-drawn by an amount of up to approximately 25%, in particular of less than approximately 15%.

20. Method according to claim 19, **characterized in that** the liner (12), before or after the nitriding treatment by means of nitrogen or ammonia, is cold-drawn.

21. Method according to claim 19 or 20, **characterized in that** the blank of the liner (12) is pressed onto the mould or die by constant pressure from the hydraulic or pneumatic pressure medium.

22. Method according to one of the claims 12 to 21, **characterized in that** the liner (12), in particular partially or fully, is subjected to solution-annealing before being cold-drawn.

23. Method according to one of the claims 12 to 22, **characterized in that** the liner (12), in particular partially or fully, is subjected to tempering after being cold-drawn.

24. Use of a pressure vessel according to one of the claims 1 to 11 or produced according to a method according to claims 12 to 23 for receiving and storing of liquids, in particular of cryogenic fluids, preferably of oxygen and hydrogen, in vehicles, particularly in aerodynes or aircraft for application in aeronautics, preferably in aeroplanes and space aerodynes, particularly in water vehicles, preferably in a submarine or air cushion craft (Hovercraft), or in particular in land vehicles, preferably in a motor car, people transport vehicle such as a bus or van, truck or camper van.

## Revendications

1. Récipient sous pression destiné à contenir et à stocker des fluides cryogéniques, en particulier des liquides cryogéniques, qui est formé d'un récipient en métal formant un doublage (12), et d'une armature (14), appliquée sur le doublage (12), en matière plastique renforcée de fibres, **caractérisé en ce que** le doublage (12) est réalisé en un alliage de métal non magnétique avec une structure réticulaire entièrement austénitique cubique à faces centrées et, pour augmenter la limite apparente d'élasticité Rp_{0,2} d'au moins 800 MPa ou plus avant application de l'armature (14) en matière plastique renforcée de fibres, est soumis à un traitement de nitruration au moyen d'azote ou d'ammoniac à une température supérieure à 1000° C, en particulier dans une plage de température entre 1000 et 1200° C.

2. Récipient sous pression selon la revendication 1, **caractérisé en ce que** le doublage (12) est formé en acier pour sous-marin.

3. Récipient sous pression selon la revendication 1 ou 2, **caractérisé en ce que** le doublage (12) est réalisé avec un alliage métallique 1.3914, 1.3948, 1.3952, 1.3957, 1.3964, 1.3965, 1.3974, 1.4529, 1.4547, 1.4565, 1.4566, Nitronic 50, S20910, 22-13-5, XM-19, 1.4652, 1.4659 ou 27-7 Mo.

4. Récipient sous pression selon l'une des revendications 1 à 3, **caractérisé en ce que** le doublage (12) est assemblé en un récipient métallique à partir d'au moins deux parties individuelles à souder l'une avec l'autre.

5. Récipient sous pression selon l'une des revendications 1 à 4, **caractérisé en ce que** le doublage (12) est soumis partiellement ou entièrement au traitement de nitruration au moyen d'azote ou d'ammoniac.

6. Récipient sous pression selon l'une des revendications 1 à 5, **caractérisé en ce que** le doublage (12) est soumis après soudage au traitement de nitruration au moyen d'azote ou d'ammoniac.

7. Récipient sous pression selon l'une des revendications 1 à 6, **caractérisé en ce que** le doublage (12) est trempé, après le traitement de nitruration, au moyen d'un refroidissement rapide sous haute pression, en particulier avec de l'azote ou de l'argon.

8. Récipient sous pression selon l'une des revendications 1 à 7, **caractérisé en ce que** le doublage (12) est étiré à froid, en particulier partiellement ou totalement, avant l'application de l'armature (14) en matière plastique renforcée de fibres, d'une valeur allant jusqu'à environ 25 %, en particulier inférieur à 15 %.

9. Récipient sous pression selon la revendication 8, **caractérisé en ce que** le doublage (12) est étiré à froid avant ou après le traitement de nitruration au moyen d'azote ou d'ammoniac.

10. Récipient sous pression selon l'une des revendications 1 à 9, **caractérisé en ce que** le doublage (12) est soumis à un recuit de mise en solution avant l'étirage à froid, en particulier partiellement ou totalement.

11. Récipient sous pression selon l'une des revendications 1 à 10, **caractérisé en ce que** le doublage (12) est tempéré après l'étirage à froid, en particulier partiellement ou totalement.

12. Procédé pour la fabrication d'un récipient sous pression pour des liquides cryogéniques, qui est formé d'un récipient métallique formant un doublage (12) et d'une armature (14), appliquée sur le doublage (12), en matière plastique renforcée de fibres, en particulier selon l'une des revendications précédentes, **caractérisé en ce que** le doublage (12) est formé d'un alliage métallique non magnétique avec une structure réticulaire entièrement austénitique cubique à faces centrées et, pour augmenter la limite d'étirage Rp_{0,2} d'au moins 800 MPa ou plus, est soumis avant l'application de l'armature (14) en matière plastique renforcée de fibres à un traitement de nitruration au moyen d'azote ou d'ammoniac, à une température supérieure à 1000° C, en particulier dans une plage de température entre 1000 et 1200° C.

13. Procédé selon la revendication 12, **caractérisé en ce que** le doublage (12) est formé en acier pour sous-marin.

14. Procédé selon la revendication 12 ou 13, **caractérisé en ce que** le doublage (12) est réalisé avec un alliage métallique 1.3914, 1.3948, 1.3952, 1.3957, 1.3964, 1.3965, 1.3974, 1.4529, 1.4547, 1.4565, 1.4566, Nitronic 50, S20910, 22-13-5, XM-19, 1.4652, 1.4659 ou 27-7 Mo.

15. Procédé selon l'une des revendications 12 à 14, **caractérisé en ce que** le doublage (12) est assemblé en un récipient métallique à partir d'au moins deux parties individuelles à souder l'une avec l'autre.

16. Procédé selon l'une des revendications 12 à 15, **caractérisé en ce que** le doublage (12) est soumis partiellement ou entièrement au traitement de nitruration au moyen d'azote ou d'ammoniac.

17. Procédé selon l'une des revendications 12 à 16, **caractérisé en ce que** le doublage (12) est trempé, après le traitement de nitruration, au moyen d'un refroidissement rapide sous haute pression, en particulier avec de l'azote ou de l'argon.

18. Procédé selon l'une des revendications 12 à 17, **caractérisé en ce que** le doublage (12) est soumis après soudage au traitement de nitruration au moyen d'azote ou d'ammoniac.

19. Procédé selon l'une des revendications 12 à 18, **caractérisé en ce que** le doublage (12) est étiré à froid, en particulier partiellement ou totalement, avant l'application de l'armature (14) en matière plastique renforcée de fibres, d'une valeur allant jusqu'à environ 25 %, en particulier inférieur à 15 %.

20. Procédé selon la revendication 19, **caractérisé en ce que** le doublage (12) est étiré à froid avant ou après le traitement de nitruration au moyen d'azote ou d'ammoniac.

21. Procédé selon la revendication 19 ou 20, **caractérisé en ce que** l'ébauche du doublage (12) est pressée contre le moule ou la matrice grâce à la pression constante du fluide sous pression hydraulique ou pneumatique.

22. Procédé selon l'une des revendications 12 à 21, **caractérisé en ce que** le doublage (12) est soumis à un recuit de mise en solution avant l'étirage à froid, en particulier partiellement ou totalement.

23. Procédé selon l'une des revendications 12 à 22, **caractérisé en ce que** le doublage (12) est soumis à une températion après l'étirage à froid, en particulier partiellement ou totalement.

24. Utilisation d'un récipient sous pression selon l'une des revendications 1 à 11, ou obtenu d'après un procédé selon les revendications 12 à 23 pour contenir et stocker des liquides, en particulier des fluides cryogéniques, de préférence de l'oxygène et de l'hydrogène, dans des véhicules, en particulier dans des véhicules aéronautiques ou des appareils volants de l'aéronautique et de l'astronautique, de préférence dans des avions et dans des engins spatiaux, en particulier dans des véhicules marins, de préférence dans un sous-marin ou un véhicule sur coussin d'air (Hovercraft), ou en particulier dans des véhicules terrestres, en particulier dans des automobiles, des véhicules de transport de personnes, comme des autobus ou minibus, des camions ou des camping-cars.
